Europäisches Patentamt

European Patent Office

Office européen des brevets

(19)

(11) Veröffentlichungsnummer: **0 168 614 B1**

(12) # EUROPÄISCHE PATENTSCHRIFT

(45) Veröffentlichungstag der Patentschrift: **04.09.91**

(21) Anmeldenummer: **85106910.4**

(22) Anmeldetag: **04.06.85**

(51) Int. Cl.⁵: **B01D 46/00**, B65G 53/06, F23J 1/02

(54) **Anordnung zum Abziehen von Gut bei einer Filteranlage.**

(30) Priorität: 06.06.84 DE 3420972

(43) Veröffentlichungstag der Anmeldung:
**22.01.86 Patentblatt 86/04**

(45) Bekanntmachung des Hinweises auf die
Patenterteilung:
**04.09.91 Patentblatt 91/36**

(84) Benannte Vertragsstaaten:
**AT BE CH DE FR GB IT LI NL SE**

(56) Entgegenhaltungen:
EP-A- 0 060 136      DE-A- 2 403 533
DE-A- 3 024 568      DE-C- 521 193
FR-A- 2 347 960      GB-A- 181 550

(73) Patentinhaber: **Bühler GmbH**
**Ernst-Amme-Strasse 19**
**W-3300 Braunschweig(DE)**

(72) Erfinder: **Müller, Dieter, Dipl.-Ing.**
**Westerberg 9b**
**W-3305 Sickte(DE)**
Erfinder: **Schildknecht, Helmut**
**16 Branchville Road**
**Valley Cottage, NY 10989(US)**

Rank Xerox (UK) Business Services

**Beschreibung**

Gegenstand der Erfindung ist eine Anordnung zum gleichzeitigen Abziehen von rieselfähigem Gut aus mehreren im Abstand voneinander angeordneten Gutauslauftrichtern einer Filteranlage oder anderen Abscheideeinrichtung.

Die beispielsweise bei der Verbrennung von Müll, in Kraftwerken oder anderen Verbrennungsanlagen anfallende Flugasche wird zum Schutz der Umwelt mittels entsprechend dimensionierter Filtereinheiten ausgeschieden und sammelt sich in deren Gutauslauftrichtern an; aus letzteren muß sie abgezogen und wegtransportiert werden. Flugasche ist erstens ein sehr abrasiver Verbrennungsrückstand und neigt zweitens ganz besonders zur Klumpenbildung, was in pneumatischen Fördersystemen eine erhöhte Gefahr des Verstopfens der Rohrleitungen in sich birgt. Für das Abziehen aus den Gutauslauftrichtern und das Abfördern ist es üblich, Kettenförderer zu benutzen; Kettenglieder und Mitnehmer unterliegen dabei einem vergleichsweise hohen Verschleiß. Da jede Filtereinheit mehrere Reihen Gutauslauftrichter hat, sind eine Vielzahl Kettenförderer als Abzugsförderer, Zwischenförderer oder Sammelförderer erforderlich, um die Flugasche von den einzelnen Gutauslauftrichtern zu einer Sammel- bzw. Sendestation zu bringen. Dies ergibt ein aufwendiges Kettenförderersystem mit erheblichem Wartungsaufwand.

Bekannt ist ferner, die Flugasche aus den Gutauslauftrichtern mittels pneumatischer Förderung auszutragen. Hierbei ist jedem Gutauslauftrichter eine Sendestation bzw. ein Schubsender zugeordnet, welche bzw. welcher eine dosierte Gutmenge in eine individuelle pneumatische Förderleitung einspeist, in der sie dann an den Bestimmungsort gefördert wird. Das erfordert bei jeder Filteranlage nicht nur eine grosse Anzahl Schubsender, sondern auch eine Vielzahl Rohrleitungen zwischen den Gutauslauftrichtern und den Schubsendern einerseits und letzteren und den Bestimmungsorten andererseits sowie ferner entsprechende Steuer- bzw. Regelorgane; auch diese Lösung bedeutet somit einen erheblichen mechanischen und steuer- bzw. regeltechnischen Aufwand, der anlagekostenmässig zu Buche schlägt.

Bei beiden Abzugssystemen vom Stand der Technik kommt noch hinzu, dass sie während des normalen Betriebes völlig ungenügend ausgelastet sind. Verbrennungsanlagen der angesprochenen Gattung werden normalerweise so gefahren, dass durchschnittlich nur etwa ein Drittel jener Menge Flugasche anfällt, welche sich bei dem in bestimmten Zeitintervallen vorzunehmenden sogenannten Russblasen mit 100% ergibt. Da die Abzugs- und Abfördermittel auch die beim Russblasen anfallende Flugasche zu bewältigen haben, müssen sie für 100% Flugasche bemessen sein. Dies bedeutet aber, dass die bekannten Systeme nur in der kurzen Zeit des Russblasens voll ausgelastet sind, in der übrigen Betriebszeit dagegen nicht, d.h., es werden in dieser übrigen Zeit 70% Förderkapazität ungenutzt in Aktion gehalten. Dies ist im hohem Masse unbefriedigend.

Nun liegt der Schluss nahe, zum Vermeiden aufwendiger Abzugssysteme bei Filtereinheiten oder ähnlichen Aggregaten statt einer Vielzahl Gutauslauftrichter nur einen einzigen davon vorzusehen. Das ist jedoch aus konstruktiven bzw. baulichen Gründen nicht möglich, weil sich dabei - soll der Rutschwinkel noch eingehalten werden - eine nicht mehr vertretbare grosse Bauhöhe der Filtereinheiten ergäbe.

Zwar ist in der EP-A-0 060 136 bereits eine Anordnung mit den Merkmalen des Oberbegriffes des Anspruches 1 vorgeschlagen worden. Hierbei ist unter jedem Gutauslauftrichter eine Sendestation vorgesehen, die über Ventile mit Druckluft beaufschlagbar sind, um den jeweiligen Pfropfen in eine Förderleitung zu bringen, die dann noch überdies Druckluft erhält. Eine derartige Anlage konnte jedoch das Problem der Klumpenbildung und der Verstopfung nicht nur nicht lösen, sondern war sogar in erhöhtem Masse dafür anfällig. Der Grund hierfür liegt darin, dass der Inhalt des Sendegefässes einen jeweils relativ dicken Pfropfen ergab, der anschliessend durch die verhältnismässig dünne Förderleitung hindurchgetrieben werden musste. Dafür aber reichte die gewählte Anordnung der Stichleitungen nicht aus. Dazu bedurften die Ventile der Stichleitung eines gewissen Steuerungsaufwandes, was die Anordnung verteuerte.

Der Erfindung liegt die Aufgabe zugrunde, möglichst mit geringerem baulichen und steuertechnischem Aufwand bzw. wirtschaftlicher eine Anordnung der im Oberbegriff des Anspruches 1 genannten Art dahingehend auszubilden, dass Verstopfungen und Klumpenbildungen verhindert werden. Diese Aufgabe wird durch die kennzeichnenden Merkmale des Anspruches 1 gelöst. Dadurch nämlich, dass die Stichleitungen nun an einer von der Einmündung der Verbindungstutzen entfernten Stelle unmittelbar in die Förderleitung einmünden, wird ein anderes Prinzip der Langsamförderung gewählt, bei dem die über die Stichleitungen einströmende Luft dort nachhilft, wo die Gefahr einer Verstopfung am grössten ist. Dabei können die eingesetzten Ventile jeweils von einem selbsttätig sperrenden Rückschlagventil gebildet sein, sodass steuertechnischer Aufwand entfällt. Vielmehr genügt ein einziges Kontrollorgan, das zentral die Förderluftzufuhr steuert.

Somit wird also durch die Erfindung bei geringerem technischen Aufwand ein verbessertes Ergebnis im Sinne einer Verringerung der Verstopfungsneigung erzielt.

Damit einerseits die in Verbindungsstutzen sich ansammelnde Flugasche leicht in die Förderleitung einströmen kann und andererseits die aus der Bypassleitung in die Förderleitung fliessenden Luftströme im gutauflockernden Sinn auch in die Verbindungsstutzen hinein wirken, sind letztere erfindungsgemäß unten als Aufgabeschuh ausgebildet, der zur Förderleitung hin in seiner in deren Längsrichtung sich erstreckenden Dimension zunimmt. Da während des Betriebes zwischen den Filterkammern bzw. deren Gutauslauftrichtern und der pneumatischen Förderleitung eine Druckdifferenz besteht, müßten erstens die Absperrorgane der Verbindungsstutzen unter Druckbelastung öffnen und schließen und müßte zweitens die Flugasche unter Gegendruck aus den Gutauslauftrichtern auslaufen; ersteres würde zu vorzeitigem Verschleiß der Absperrorgane führen; letzteres würde den Gutfluß beeinträchtigen. Zur Druckentlastung der Absperrorgane und zum Vermeiden eines Gegendruckes ist nach einem anderen Erfindungsmerkmal zwischen wenigstens einem der Verbindungsstutzen bzw. Aufgabeschuhe und dem ihm zugeordneten Gutauslauftrichter eine Entlüftungsleitung mit eingefügtem Entlüftungsventil vorgesehen, mit deren Hilfe vor jedem Betätigen des Absperrorganes ein Druckausgleich zwischen Gutauslauftrichter bzw. Filtergehäuse und Förderleitung herbeigeführt wird. Um bei aus mehreren Gruppen Filterkammern bestehenden Filtereinheiten eine Gruppe zeitweise drucklos machen zu können, wie dies z. B. bei Wechselbetrieb für Überholungsoder Reparaturzwecke notwendig ist, gleichzeitig die andere(n) Gruppe(n) aber ungehindert in Betrieb halten zu können, ist nach der weiteren Erfindung hinter dem Verbindungsstutzen des in Förderrichtung letzten Gutauslauftrichters ein Absperrorgan in der Förderleitung angeordnet und die By-passleitung in zwei Abschnitte gegliedert, von denen der eine Abschnitt den Bereich der Förderleitung vor dem Absperrorgan und der andere Abschnitt den Bereich der Förderleitung hinter dem Absperrorgan zugeordnet ist.

In der Zeichnung ist ein Ausführungsbeispiel von der Abzugsanordnung nach der Erfindung in der Anwendung bei einem großen Kraftwerksfilter dargestellt, das im nachfolgenden beschrieben wird. Es zeigen

Fig. 1  eine perspektivische Ansicht einer Kraftwerksfiltereinheit mit der Abzugsanordnung nach der Erfindung und

Fig. 2  ein Blockschaltbild von der Steuerung für die Absperrorgane der Abzugsanordnung.

Die Kraftwerksfiltereinheit besitzt zwei Gruppen je zu einer Reihe nebeneinander angeordneter Filterkammern, nämlich eine erste Filterkammergruppe 1 und eine zweite Filterkammergruppe 2. Jede von ihnen umfaßt vier Filterkammern 3, die ihrerseits je aus einer Schlauchkammer 4 mit Filterschläuchen 7, einem aufklappbaren Filterkopf 5 und einem Gutauslauftrichter 6 bestehen. Zwischen den beiden Filterkammergruppen 1, 2 ist ein Rohund Reingaskanal 8 angeordnet, der durch eine nicht dargestellte Zwischenwand in einen Rohgaskanal und einen Reingaskanal aufgeteilt wird, von denen der Rohgaskanal Verbindung hat zu jeder der Schlauchkammern 4 und der Reingaskanal mit jedem Filterkopf 5 und damit mit dem Inneren der Filterschläuche 7 in Verbindung steht.

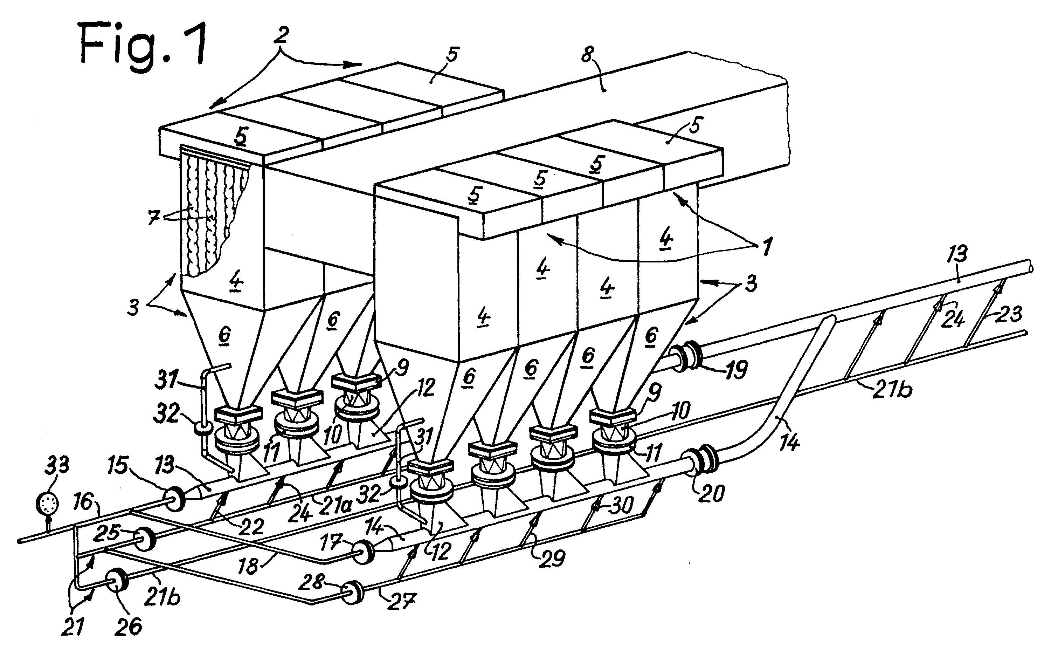

Jeder Gutauslauftrichter weist an seinem unteren Ende einen von Hand zu betätigenden Absperrschieber 9 auf, mit dessen Hilfe seine Gutaustrittsöffnung verschlossen werden kann. Je ein Übergangsstück 10 und ein Verbindungsstutzen 12 mit zwischengeschaltetem, steuerbaren Schieber 11 verbinden den einzelnen Gutauslauftrichter 6 mit einer gemeinsamen pneumatischen Förderleitung 13 bzw. 14. Hierbei bedient die Förderleitung 13 die Verbindungsstutzen 12 der Gutauslauftrichter 6 der vier Filterkammern 3 der Filterkammergruppe 2 und die von ihr abzweigende Förderleitung 14 die Verbindungsstutzen 12 der Gutauslauftrichter 6 der vier Filterkammern 3 der Filterkammergruppe 1. Wie die Figur 1 erkennen läßt, ist jeder Verbindungsstutzen 12 unten als Aufgabeschuh gestaltet, welcher zur Förderleitung 13 bzw. 14 hin in seiner in Längsrichtung der letzteren sich erstreckenden Dimension zunimmt. Die Förderleitung 13 ist über eine Absperrklappe 15 mit einer Druckluftleitung 16 verbunden, desgleichen die Förderleitung 14 über eine Absperrklappe 17 mit einer von der Druckluftleitung 16 abzweigenden Druckluftleitung 18. In der Druckluftleitung 16, welche die Hauptversorgungsleitung für die Förderluft verkörpert, sind nicht dargestellte, bekannte Einstellorgane für die Versorgung sowie Mengenregulierung eingebaut. Hinter dem in Förderrichtung letzten Verbindungsstutzen 12 ist in die Förderleitung 13 ein Ventil 19 eingefügt und in gleicher Anordnung in die Förderleitung 14 ein Ventil 20 eingesetzt.

Der Förderleitung 13 ist eine nebenherlaufende By-passleitung 21 zugeordnet, die von der Druckluftleitung 16 abzweigt und in zwei Abschnitte 21a, 21b gegliedert ist, von denen der Abschnitt 21a zum Bereich der Förderleitung 13 - in Förderrichtung gesehen - vor dem Ventil 19 und der Abschnitt 21b zu deren Bereich hinter dem Ventil 19 gehört. Annähernd in gleichen Abständen angeordnete Verbindungsleitungen 22 bzw. 23 verbinden die By-passleitung-Abschnitte 21a und 21b mit der Förderleitung 13, wobei in jede Verbindungsleitung 22 bzw. 23 ein Rückschlagventil 24 eingebaut ist, das den Abfluß aus der Förderleitung 13 in die Bypassleitung 21 bzw. in deren Abschnitte 21a, 21b verhindert. Jeder der beiden Abschnitte 21a, 21b kann mittels einer Absperrklappe 25 bzw. 26 vom Zustrom der Druckluft abgesperrt werden, welche eingangsseitig in ihm angeordnet ist.

Der anderen Förderleitung 14 ist eine By-passleitung 27 zugeordnet, welche vom Abschnitt 21a der By-passleitung 21 abzweigt und durch eine Absperrklappe 28 verschließbar ist; eine Mehrzahl in ungefähr gleichen Abständen plazierter Verbindungsleitungen 29 mit eingefügtem Rückschlagventil 30 schließen die By-passleitung 27 an die Förderleitung 14 an. Um zwecks Entlastung der steuerbaren Schieber 11 vom Luftdruck in der Förderleitung 13 bzw. 14 und Vermeiden eines Gegendruckes beim Ausfließen des Gutes aus den Gutauslauftrichtern 6 einen Druckausgleich zwischen der Förderleitung 13 bzw. 14 einerseits und den Filterkammern 3 der zugehörigen Filterkammergruppe 1 bzw. 2 andererseits herbeiführen zu können, ist zwischen dem Gutauslauftrichter 6 einer Filterkammer 3 jeder Filterkammergruppe 1 bzw. 2 und dem ihr zugeordneten Verbindungsstutzen 12 eine Entlüftungsleitung 31 mit eingefügtem Entlüftungsventil 32 vorgesehen.

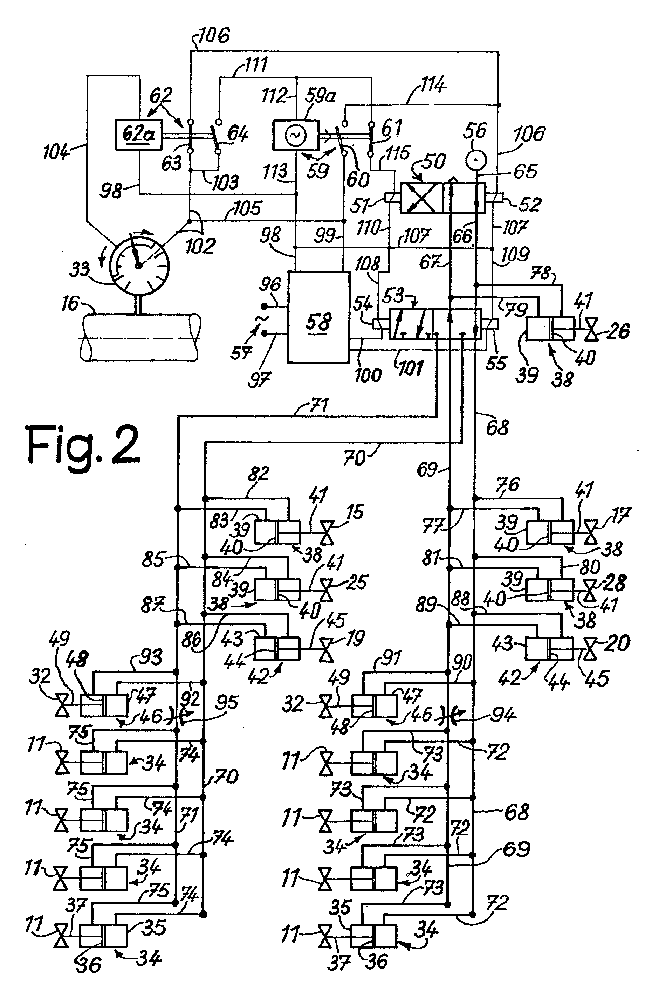

Zur Steuerung der Förderluftzufuhr in die beiden Förderleitungen 13, 14 sowie in die beiden By-passleitungen 21, 27 ist an die sie speisende Druckluftleitung 16 ein Kontrollorgan in Form eines Kontaktmanometers 33 angeschlossen (Fig. 1). Das Blockschaltbild nach Fig. 2 gibt die Steuerung im einzelnen wieder. Sie umfaßt neben dem besagten Kontaktmanometer 33 und den bereits erwähnten zwei mal vier Schiebern 11 (nur Symbole sind dargestellt) der Gutauslauftrichter 6 der beiden Filterkammergruppen 1, 2, den Absperrklappen 15, 17 sowie 25, 26, 28, den Ventilen 19, 20 und den Entlüftungsventilen 32 beider Filterkammergruppen 1, 2, ferner acht Zylinder-Kolbensysteme 34 mit Zylinder 35, Kolben 36 sowie Kolbenstange 37 zum Betätigen der acht Schieber 11, fünf Zylinder-Kolbensysteme 38 mit Zylinder 39, Kolben 40 und Kolbenstange 41 für die fünf Absperrklappen 15, 17, 25, 26, 28, zwei Zylinder-Kolbensysteme 42 mit Zylinder 43, Kolben 44 und Kolbenstange 45 zum Betätigen der beiden Ventile 19, 20 sowie zwei Zylinder-Kolbensysteme 46 mit Zylinder 47, Kolben 48 und Kolbenstange 49 für die beiden Entlüftungsventile 32; die Steuerung umfaßt außerdem ein erstes Elektromagnetventil 50 mit Elektromagneten 51, 52, ein zweites Elektromagnetventil 53 mit Elektromagneten 54, 55, eine Druckluftquelle 56, eine elektrische Spannungsquelle 57, eine elektrische Steuereinheit 58, ein Zeitrelais 59 mit Kontakten 60, 61 und ein Schütz 62 mit Kontakten 63, 64. Die Steuereinheit 58 ist eine frei programmierbare, elektronische Steuerung, beispielsweise eine S105 der Firma Siemens.

Die Druckluftquelle 56 ist mittels Rohrleitung 65 an das Elektromagnetventil 50 angeschlossen, das seinerseits durch zwei Rohrleitungen 66, 67 mit dem Elektromagnetventil 53 verbunden ist. Vom Elektromagnetventil 53 führen Hauptversorgungsleitungen zu den besagten Schiebern, Absperrklappen und Ventilen, nämlich das Rohrleitungspaar mit den Rohrleitungen 68, 69 und das Rohrleitungspaar mit den Rohrleitungen 70, 71. Die Zylinder 35 der vier Zylinder-Kolbensysteme 34 zum Betätigen der Schieber 11 der ersten Filterkammergruppe 1 sind je kolbenseitig durch eine Rohrleitung 72 mit der Rohrleitung 68 und kolbenstangenseitig durch eine Rohrleitung 73 mit der Rohrleitung 69 verbunden. In gleicher Weise sind die Zylinder der vier Zylinder-Kolbensysteme 34 zum betätigen der Schieber 11 der zweiten Filterkammergruppe 2 je kolbenseitig durch eine Rohrleitung 74 an die Rohrleitung 70 und kolbenstangenseitig durch eine Rohrleitung 75 an die Rohrleitung 71 angeschlossen. Von den Zylinder-Kolbensystemen 38 der fünf Absperrklappen ist der Zylinder 39 des Zylinder-Kolbensystems 38 der Absperrklappe 17 über eine Rohrleitung 76 mit der Rohrleitung 68 und über eine Rohrleitung 77 mit der Rohrleitung 69 verbunden und ebenso der Zylinder 39 des Zylinder-Kolbensystems 38 der Absperrklappe 26 über Rohrleitung 78 mit Rohrleitung 66 und über Rohrleitung 79 mit Rohrleitung 67, der Zylinder 39 des Zylinder-Kolbensystems 38 der Absperrklappe 28 über Rohrleitung 80 mit Rohrleitung 68 und über Rohrleitung 81 mit Rohrleitung 69, der Zylinder 38 des Zylinder-Kolbensystems 39 der Absperrklappe 15 über Rohrleitung 82 mit Rohrleitung 70 und über Rohrleitung 83 mit Rohrleitung 71 sowie schließlich der Zylinder 38 des Zylinder-Kolbensystems der Absperrklappe 25 durch Rohrleitung 84 mit Rohrleitung 70 und durch Rohrleitung 85 mit Rohrleitung 71. Den Zylinder 43 des Zylinder-Kolbensystems 42 des Ventils 19 verbindet eine Rohrleitung 86 mit der Rohrleitung 70 sowie eine Rohrleitung 87 mit der Rohrleitung 71. Eine Rohrleitung 88 schließt den Zylinder 43 des Zylinder-Kolbensystems 42 des Ventils 20 an die Rohrleitung 68 an und eine Rohrleitung 89 an die Rohrleitung 69. Rohrleitungen 90, 91 stellen Verbindung her zwischen dem Zylinder 47 des Zylinder-Kolbensystems 46 des Entlüftungsventils 32 der ersten Filterkammergruppe 1 und den Rohrleitungen 68, 69, und Rohrleitungen 92, 93 schließen den Zylinder 47 des Zylinder-Kolbensystems 46 des Entlüftungsventils 32 der zweiten Filterkammergruppe 2 an die Rohrleitungen 70, 71 an. In die Rohrleitungen 69 und 71 ist zwischen den Rohrleitungsanschlüssen des Zylinders 47 des Zylinder-Kolbensystems 46 des Entlüftungsventils 32 und den Rohrleitungsanschlüssen der Zylinder 35 der Zylinder-Kolbensysteme 34 der vier Schieber 11 je eine verstellbare Drossel 94 bzw. 95 eingebaut, mit deren Hilfe in der Rohrleitung 69 bzw. 71 der Druckluftstrom gedrosselt wird, um ein verzögertes Ansprechen der Schieber 11 gegenüber den Entlüftungsventilen 32 zu erreichen.

Neben den besagten pneumatischen Verbindungen ergeben sich aus Fig. 2 auch die elektrischen Verbindungen (elektrischen Leitungen). Die Steuereinheit 58 ist durch Leitungen 96, 97 mit der Spannungsquelle 57, durch eine Leitung 98 mit der Spule 62a des Schützes 62, durch eine Leitung 99 mit dem Kontakt 60 des Zeitrelais 59 sowie durch Leitungen 100, 101 mit den Elektromagneten 54, 55 des Elektromagnetventils 53 verbunden. Eine Leitung 102 und eine Zweigleitung 103 verbinden die Kontakte 63, 64 des Schützes 62 mit dem Kontaktmanometer 33, das über Leitung 104 Verbindung hat zur Spule 62a des Schützes 62. Eine Leitung 105 stellt Verbindung her zwischen Leitung 102 und Leitung 99. Eine Leitung 106 schließt den Kontakt 63 des Schützes 62 an den Elektromagnet 52 des Elektromagnetventils 50 an, welcher durch eine Leitung 107 mit der Leitung 98 verbunden ist; Zweigleitungen 108, 109 verbinden die Leitung 107 mit den beiden Elektromagneten 54, 55 des Elektromagnetventils 53; eine Zweigleitung 110 verbindet sie außerdem mit dem Elektromagnet 51 des Elektromagnetventils 50. Der Kontakt 64 des Schützes 62 ist mittels Leitung 111 an den Kontakt 62 des Zeitrelais 59 angeschlossen. Eine Zweigleitung 112 verbindet den Motor 59a des Zeitrelais 59 mit der Leitung 111, eine Zweigleitung 113 verbindet ihn mit der Leitung 98. Von den Kontakten 60, 62 des Zeitrelais 59 sind zusätzlich der Kontakt 60 durch eine Zweigleitung 114 an die Leitung 106 und der Kontakt 62 mittels Leitung 115 an den Elektromagnet 51 des Elektromagnetventils 50 angeschlossen.

Während des Betriebes fällt die Flugasche ständig in unterschiedlicher Menge in den Schlauchkammern 4 sowie in den angrenzenden Gutauslauftrichtern 6 an. Da die Absperrschieber 9 und die steuerbaren Schieber 11 der betriebsbereiten Abzugsanordnung geöffnet sind, fällt die Flugasche weiter durch die Übergangsstücke 10 hindurch in die Verbindungsstutzen 12 und damit in die darunter befindliche Förderleitung 14 bzw. 13. In Abhängigkeit von dem Zeitrelais 59, und zwar nach Ablauf der an ihm eingestellten Zeit, schließt dieses seinen Kontakt 60 und öffnet seinen Kontakt 62. Dadurch wird der Elektromagnet 52 an Spannung gelegt und betätigt das Elektromagnetventil 50. Letzteres verbindet die Rohrleitungen 65 und 66, so daß die Druckluft aus der Druckluftquelle 56 in der Rohrleitung 66 ansteht und über Rohrleitung 78 den Zylinder 39 des Zylinder-Kolbensystems 38 kolbenstangenseitig beaufschlagt und die Absperrklappe 26 im Sinne Öffnen betätigt wird; durch die geöffnete Absperrklappe 26 strömt die Druckluft über den Abschnitt 21b der By-passleitung 21 sowie die Verbindungsleitungen 23 und Rückschlagventile 24 in die Förderleitung 13 hinter dem Ventil 19.

Nach Maßgabe der Steuereinheit 58 wurde gleichzeitig der Elektromagnet 55 des Elektromagnetventils 53 betätigt, so daß letzteres die Rohrleitung 66 mit der Rohrleitung 68 sowie die Rohrleitung 67 mit der Rohrleitung 69 verbunden hat und die Zylinder 39 bzw. 43 der Zylinder-Kolbensysteme 38, 42 kolbenstangenseitig sowie die Zylinder 35 bzw. 47 der Zylinder-Kolbensysteme 34 und 46 kolbenseitig beaufschlagt wurden; dadurch sind die Absperrklappen 17, 28 sowie das Ventil 20 geöffnet und die vier Schieber 11 und das Entlüftungsventil 32 geschlossen. Dies bedeutet, daß erstens keine Flugasche mehr in die Verbindungsstutzen 12 fallen kann und zweitens die Druckluft über die Druckluftleitungen 16 und 18 in die Förderleitung 14 strömen kann und drittens Druckluft außerdem über die By-passleitung 27, Verbindungsleitungen 29 sowie Rückschlagventile 30 in die Förderleitung 14 strömen kann. Die Förderluft überwindet unter gleichzeitigem Druckanstieg den Förderwiderstand der in der Förderleitung 14 befindlichen Flugasche und transportiert diese Flugasche und die aus den Verbindungsstutzen 12 noch nachrutschende Flugasche durch das Ventil 20 hindurch und über die weiterführende Förderleitung 13 an den Bestimmungsort.

Das Kontaktmanometer 33 spricht auf den besagten Druckanstieg in der Förderleitung 14 an und legt das Schütz 62 an Spannung, so daß dieses anzieht und seinen Kontakt 63 schließt und seinen Kontakt 64 öffnet (Stellung gemäß Fig. 2), wobei über Leitung 106 der Stromkreis für den Elektromagneten 52 des Elektromagnetventils 50 weiter geschlossen bleibt, obwohl der über die Leitung 114 führende Stromkreis desselben durch Ablauf des Zeitrelais 59 und Öffnen seines Kontaktes 60 unterbrochen wird.

Sobald die Flugasche aus der Förderleitung 14 und den Verbindungsstutzen 12 abgefördert ist, fällt der Druck in der Förderleitung 14 und damit auch in den Druckluftleitungen 18 und 16, so daß das Kontaktmanometer 33 das Schütz 62 von Spannung trennt und dieses seinen Kontakt 63 öffnet und seinen Kontakt 64 schließt. Der Kontakt 63 öffnet über Leitung 106 den Stromkreis des Elektromagneten 52, und der Kontakt 64 schließt über Leitung 111, Kontakt 62 des Zeitrelais 59 sowie Leitung 115 den Stromkreis für den Elektromagnet 51, welcher das Elektromagnetventil 50 umschaltet, wodurch die Rohrleitung 65 mit den Rohrleitungen 67 und 69 und die Rohrleitungen 66 und 68 mit der Atmosphäre verbunden werden. Durch die hieraus resultierende Umkehrung der Beaufschlagung der Zylinder der zugeordneten Zylinder-Kolbensysteme werden nun die Absperrklappen 26, 17 und 28 sowie das Ventil 20 geschlossen und das Entlüftungsventil 32 sofort, die vier Schieber 11 dagegen - durch die Wirkung der Drossel 94 - verzögert geöffnet.

Durch das erwähnte Schließen des Kontaktes 64 des Schützes 62 wurde über die Leitungen 111, 112 das Zeitrelais 59 aktiviert.

Mit dem besagten Öffnen des Entlüftungsventils 32 wurde der Druckunterschied zwischen der Förderleitung 14 und den Verbindungsstutzen 12 einerseits und den Filterkammern 3 andererseits ausgeglichen. Damit ist ein Arbeitszyklus der erfindungsgemäßen Abzugsanordnung abgeschlossen und der Ausgangszustand wieder erreicht. Dieses Arbeitsspiel wieholt sich, sobald das Zeitrelais 59 abgelaufen ist und erneut einen Steuer- und Fördervorgang auslöst.

Das vorangehend besprochene Ausführungsbeispiel der Abzugsanordnung bezog sich lediglich auf die Filterkammergruppe 1; der Arbeitszyklus für die Filterkammergruppe 2 entspricht dem sinngemäß. Der Wechsel von einer Filterkammergruppe auf die andere in bezug auf das Abfördern der Flugasche wird durch die Steuereinheit 58 unter Vermittlung des von ihr betätigten Elektromagnetventiles 53 bewirkt, indem die Steuereinheit, wenn mit der Förderleitung 14 gefördert werden soll, den Elektromagnet 55, und, wenn mit der Förderleitung 13 gefördert werden soll, den Elektromagnet 54 an Spannung legt und damit das Elektromagnetventil 53 in seine erste oder in seine zweite Schaltstellung bringt, so daß die Rohrleitung 66 entweder mit der Rohrleitung 68 oder mit der Rohrleitung 70 und die Rohrleitung 67 entweder mit der Rohrleitung 69 oder mit der Rohrleitung 71 verbunden wird.

Bei dem beschriebenen Ausführungsbeispiel wird die Druckluftzufuhr für die beiden Förderleitungen 13, 14 und die By-passleitungen 21, 27 von einem Kontaktmanometer 33 als Kontrollorgan gesteuert. Statt einer solchen druckabhängigen Steuerung kann die Abzugsanordnung nach der Erfindung auch gutabhängig gesteuert werden, z. B. von einem Kontrollorgan, das ein vorgegebenes Gutniveau in der Förderleitung 13 bzw. 14 oder in den Verbindungsstutzen 12 abtastet bzw. das einen bestimmten Ort der Abzugsanordnung dahingehend überwacht, ob dort Gut vorhanden ist oder nicht. Als Kontrollorgan für das Gut kann ein handelsüblicher mechanischer oder elektrischer Taster benutzt werden, etwa eine Pendelklappe, ein elektrisches Drehflügelgerät, ein kapazitiver oder induktiver Grenztaster oder dergleichen. Der Aufbau der Steuerung ist in diesem Fall im Prinzip der gleiche, wie er in Fig. 2 dargestellt ist.

Der mit der Erfindung erzielte Fortschritt besteht hauptsächlich darin, daß selbst für sehr große Kraftwerksfiltereinheiten und damit für eine Vielzahl von Gutauslauftrichtern nur eine einzige als Einfach- oder Doppelstation gebaute Sendestation erforderlich ist, welche sich durch geringe Bauhöhe und relativ einfache Installation auszeichnet, ferner darin, daß sie aufgrund der angewandten pneumatischen Langsamförderung sowie der nur vom anfallenden Gut abhängigen Betriebsdauer energetisch besonders günstig ist, d. h. nur in Tätigkeit ist und Energie verbraucht, wenn entsprechend Gut zur Abförderung bereitliegt; weitere Vorteile sind das automatische Ansammeln des Gutes aus sämtlichen Gutauslauftrichtern einer Filterkammergruppe in nur einem Förderleitungsstrang und daß der Verschleiß innerhalb der Abzugsanordnung dank der Langsamförderung auf ein Minimum reduziert ist.

## Patentansprüche

1. Anordnung zum gleichzeitigen Abziehen von rieselfähigem Gut aus mehreren im Abstand voneinander angeordneten Gutauslauftrichtern (6), die einer Filteranlage (7) oder einer anderen Abscheideeinrichtung angehören und von denen ein jeder über einen mit mindestens einem Absperrorgan (11) versehenen Verbindungsstutzen (12) an eine gemeinsame pneumatische Förderleitung (13, 14) angeschlossen ist, der eine nebenher laufende Druckluftleitung (21, 27) mit in Abständen von ihr abzweigenden Stichleitungen (29) zur Unterstützung des Fördervorganges zugeordnet ist, die als mit je einem Ventil (24, 30) versehene By-pass-Leitung (21, 27) zur Förderleitung (13, 14) ausgebildet ist, dadurch gekennzeichnet,

dass die Stichleitungen (22, 23; 29) an einer von der Einmündung der Verbindungsstutzen (12) entfernten Stelle unmittelbar in die Förderleitung (13, 14) einmünden und diese mit Druckluft beaufschlagen, wobei in jede dieser entfernt von den Verbindungsstutzen (12) in die Förderleitung (13, 14) einmündenden Stichleitungen (22, 23; 29) ein den Abfluss aus der Förderleitung (13, 14) in die By-pass-Leitung (21, 27) selbsttätig sperrendes Rückschlagventil (24, 30) eingefügt ist, und dass wenigstens ein Kontrollorgan (33) vorgesehen ist, das abhängig vom Druck in der Förderleitung (13 bzw. 14) oder vom Vorhandensein von Gut in der Förderleitung oder in den Verbindungsstutzen (12) die Förderluftzufuhr steuert.

2. Anordnung nach Anspruch 1,
dadurch gekennzeichnet,
daß der Verbindungsstutzen (12) unten als Aufgabeschuh ausgebildet ist, der zur Förderleitung (13, 14) hin in seiner in deren Längsrichtung sich erstreckenden Dimension zunimmt.

3. Anordnung nach den Ansprüchen 1 und 2, dadurch gekennzeichnet, daß zwischen wenigstens einem der Verbindungsstutzen (12) und dem ihm zugeordneten Gutauslauftrichter (6) eine Entlüftungsleitung (31) mit eingefügtem Entlüftungsventil (32) vorgesehen ist.

4. Anordnung nach Anspruch 1 und einem der folgenden Ansprüche, dadurch gekennzeichnet, daß hinter dem Verbindungsstutzen (12) des in Förderrichtung letzten Gutauslauftrichters (6) ein Absperrorgan (19) in der Förderleitung (13) angeordnet und die By-passleitung (21) in zwei Abschnitte (21a, 21b) gegliedert ist, von denen der eine Abschnitt (21a) dem Bereich der Förderleitung vor dem Absperrorgan (19) und der andere Abschnitt (21b) dem Bereich der Förderleitung (13) hinter dem Absperrorgan (19) zugeordnet ist.

5. Anordnung nach einem der vorhergehenden Ansprüche, dadurch gekennzeichnet, dass der Ausgang des jeweiligen Gutauslauftrichters (6) durch ein über eine Steueranordnung (51-106) während der gesamten Förderdauer offen gehaltenes, das Absperrorgan (11) bildendes Ventil (11) absperrbar ist.

## Claims

1. Arrangement for the simultaneous discharge of pourable material from a plurality of material outflow hoppers (6) which are situated spaced apart from one another and which belong to a filter installation (7) or another separating apparatus, and each of which is connected, via a connecting union (12) provided with at least one shutoff element (11), to a common pneumatic conveying conduit (13, 14), the latter being associated with an adjacently disposed compressed-air conduit (21, 27) having branch conduits (29) branching therefrom at intervals for assisting the conveying operation, said conduit being constructed as a bypass conduit (21, 27) bypassing the conveying conduit (13, 14), and provided each with a valve (24, 30), characterised in that the branch conduits (22, 23; 29) debouch directly into the conveying conduit (13, 14) at a place remote from the mouth of the connecting unions (12) and introduce compressed air into said conveying conduit, there being interposed in each of these branch conduits (22, 23; 29) debouching into the conveying conduit (13, 14) at points remote from the connecting unions (12) a non-return valve (24, 30) which automatically blocks outflow from the conveying conduit (13, 14) into the bypass conduit (21, 27), and that at least one monitoring element (33) is provided which controls the infeed of conveying air in dependence on the pressure in the conveying conduit (13 or 14) or on the presence of material in the conveying conduit or in the connecting unions (12).

2. Arrangement according to claim 1, characterised in that the connecting union (12) is constructed in its lower region as a feed shoe which increases towards the conveying conduit (13, 14) in its dimension which extends in the longitudinal direction of the said conduit.

3. Arrangement according to claims 1 and 2, characterised in that a venting conduit (31) with a built-in venting valve (32) is provided between at least one of the connecting unions (12) and that material outflow hopper (6) which is associated with the said union.

4. Arrangement according to claim 1 and one of the following claims, characterised in that downstream of the connecting union (12) of the last material outflow hopper (6) in the conveying direction a shutoff element (19) is situated in the conveying conduit (13), and the bypass conduit (21) is arranged in two portions (21a, 21b) of which one portion (21a) is associated with the region of the conveying conduit upstream of the shutoff element (19) and the other portion (21b) is associated with the region of the conveying conduit (13) downstream of the shutoff element (19).

5. Arrangement according to one of the preceding claims, characterised in that the outlet of each material outflow hopper (6) is adapted to be closed by a valve (11) which constitutes the shutoff element (11) and which is held open during the entire duration of conveying by means of a control arrangement (51-106).

## Revendications

1. Dispositif pour extraire simultanément un produit coulant se trouvant dans plusieurs trémies d'évacuation de produit (6) disposées à distance les unes des autres, qui appartiennent à une installation de filtrage (7) ou à un autre dispositif de séparation et dont pour chacune leur tubulure de liaison (12), pourvue en partie supérieure d'au moins un organe d'obturation (11), est raccordée à une conduite de transport pneumatique commune (13,14), à laquelle est associée une conduite d'air comprimé (21,27) cheminant au voisinage, avec des conduites de piquage (29) qui en dérivent à intervalles espacés, en vue d'assister le processus de transport, et qui est réalisée sous forme d'une conduite de dérivation (21,27) pourvue chaque fois d'une soupape (24,30) et allant à la conduite de transport (13,14), caractérisé en ce que le conduites de piquage (22,23;29) débouchent en un emplacement éloigné de l'embouchure des tubulures de liaison (12), directement dans la conduite de transport (13,14), et sollicitent celles-ci par de l'air comprimé, où, en chacune de ces conduites de piquage (22,23;29) s'embouchant à distance des tubulures de liaison (12) dans la conduite de transport (13,14), est introduit un clapet anti-retour (24,30) qui bloque automatiquement l'échappement hors de la conduite de transport (13,14) dans la conduite de dérivation (21,27), et qu'est prévu au moins un organe de contrôle (33) qui commande l'amenée d'air de transport, indépendamment de la pression dans la conduite de transport (13, respectivement 14) ou de la présence de produit dans la conduite de transport ou dans les tubulures de liaison (12).

2. Dispositif selon la revendication 1, caractérisé en ce que la tubulure de liaison (12) est réalisée en partie inférieure sous forme de caisson alimentateur dont la dimension augmente en allant vers la conduite de transport (13,14), en s'étendant dans le sens longitudinal de cette dernière.

3. Dispositif selon les revendications 1 et 2, caractérisé en ce qu'une conduite d'évent (31) avec une soupape d'évent incorporée (32) est prévue entre au moins l'une des tubulures de liaison (12) et la trémie d'évacuation de produit (6) lui étant associée.

4. Dispositif selon la revendication 1, caractérisé en ce qu'un organe d'obturation (19) est disposé dans la conduite de transport (13), derrière la tubulure de liaison (12) de la trémie d'évacuation de produit (6) située en dernière position dans le sens de transport, et la conduite de dérivation (21) étant décomposée en deux sections (21a,21b), dont une section (21a) est associée à la zone de la conduite de transport située avant l'organe d'obturation (19), et l'autre section (21b) est associée à la zone de la conduite de transport (13) Située derrière l'organe d'obturation (19).

5. Dispositif selon l'une des revendications précédentes, caractérisé en ce que la sortie de chaque trémie d'évacuation de produit (6) est obturable au moyen d'une soupape (11) formant l'organe d'obturation (11), maintenue ouverte pendant la totalité de la durée de transport par l'intermédiaire d'un dispositif de commande (51 à 106).

Fig. 1

**Fig. 2**